(19) Europäisches Patentamt / European Patent Office / Office européen des brevets

(11) **EP 4 181 236 B1**

(12) **EUROPEAN PATENT SPECIFICATION**

(45) Date of publication and mention
of the grant of the patent:
**08.04.2026 Bulletin 2026/15**

(21) Application number: **21869726.6**

(22) Date of filing: **15.09.2021**

(51) International Patent Classification (IPC):
*H01M 4/587* (2010.01)    *H01M 4/36* (2006.01)
*H01M 4/62* (2006.01)    *H01M 4/133* (2010.01)
*H01M 10/0525* (2010.01)    *H01M 4/02* (2006.01)

(52) Cooperative Patent Classification (CPC):
**H01M 4/133; H01M 4/366; H01M 4/587;
H01M 4/625; H01M 10/0525;** H01M 2004/021;
H01M 2004/027; Y02E 60/10

(86) International application number:
**PCT/KR2021/012630**

(87) International publication number:
**WO 2022/060104 (24.03.2022 Gazette 2022/12)**

(54) **NEGATIVE ELECTRODE ACTIVE MATERIAL, AND NEGATIVE ELECTRODE AND SECONDARY BATTERY WHICH INCLUDE THE SAME**

NEGATIVES ELEKTRODENAKTIVMATERIAL UND NEGATIVE ELEKTRODE UND SEKUNDÄRBATTERIE ENTHALTEND DASSELBE

MATÉRIAU ACTIF D'ÉLECTRODE NÉGATIVE ET ÉLECTRODE NÉGATIVE ET BATTERIE SECONDAIRE LE COMPRENANT

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **18.09.2020 KR 20200120878**

(43) Date of publication of application:
**17.05.2023 Bulletin 2023/20**

(73) Proprietor: **LG Energy Solution, Ltd.
Seoul 07335 (KR)**

(72) Inventors:
• **LEE, Chang Ju
Daejeon 34122 (KR)**
• **WOO, Sang Wook
Daejeon 34122 (KR)**
• **NOH, Suk In
Daejeon 34122 (KR)**

(74) Representative: **Hoffmann Eitle
Patent- und Rechtsanwälte PartmbB
Arabellastraße 30
81925 München (DE)**

(56) References cited:
EP-A1- 3 641 034    EP-B1- 2 945 209
JP-A- H05 163 491    JP-B2- 6 135 680
KR-A- 20170 048 210    KR-A- 20170 048 210
KR-B1- 101 348 226    US-A1- 2013 004 410

**Description**

**TECHNICAL FIELD**

**Cross-reference to Related Applications**

This application claims priority from Korean Patent Application No. 10-2020-0120878, filed on September 18, 2020.

**Technical Field**

The present invention relates to a negative electrode active material, and a negative electrode and a secondary battery which include the same.

**BACKGROUND ART**

An eco-friendly alternative energy source is becoming an indispensable factor for future life as the price of energy sources increases due to the depletion of fossil fuels and interest in environmental pollution grows.

Particularly, demand for secondary batteries as the eco-friendly alternative energy source has been significantly increased as technology development and demand with respect to mobile devices have increased.

Also, recently, in line with growing concerns about environmental issues, a significant amount of research into electric vehicles (EVs) and hybrid electric vehicles (HEVs), which may replace vehicles using fossil fuels, such as gasoline vehicle and diesel vehicle, one of major causes of air pollution, has been conducted. Lithium secondary batteries having high energy density, high discharge voltage, and high output stability have been mainly researched and used as power sources of these electric vehicles (EVs) and hybrid electric vehicles (HEVs).

In the secondary battery, lithium metal has been conventionally used as a negative electrode, but the use of a carbon-based active material, which may reversibly intercalate and deintercalate lithium ions and maintains structural and electrical properties, has emerged as a battery short circuit due to formation of dendrites and risk of accompanying explosion become a problem.

Various types of carbon-based materials, such as artificial graphite, natural graphite, and hard carbon, have been used as the carbon-based active material, and, among them, a graphite-based active material, which may guarantee life characteristics of the lithium secondary battery due to excellent reversibility, has been most widely used. Since the graphite-based active material has a low discharge voltage relative to lithium of -0.2 V, a battery using the graphite-based active material may exhibit a high discharge voltage of 3.6 V, and thus, it provides many advantages in terms of energy density of the lithium battery.

Among the graphite-based active materials, natural graphite is advantageous in that it has high output and capacity, but there is a concern that a problem of swelling phenomenon due to a high degree of orientation may occur, and there is a problem in that high-temperature characteristics are not good due to relatively more functional groups on its surface than artificial graphite.

In contrast, artificial graphite is advantageous in that it has a better swelling inhibition effect than the natural graphite and has excellent high-temperature characteristics, but is known to be inferior in terms of output characteristics. In this respect, research to improve the output characteristics of the artificial graphite is in progress.

In order to improve the output characteristics of the artificial graphite, research on reducing a particle diameter of the artificial graphite or forming a coating layer with amorphous carbon or the like has been conducted. However, in a case in which the particle diameter of the artificial graphite is reduced, there is a problem in that a grinding yield is reduced or capacity is reduced. Also, in a case in which the amorphous carbon coating layer is formed on the artificial graphite, it is not desirable because there is a problem that initial efficiency is reduced due to an increase in specific surface area or storage performance is degraded.

Thus, there is an urgent need to develop a negative electrode active material capable of improving capacity and initial efficiency as well as the output characteristics of the artificial graphite.

Japanese Patent No. 4403327 discloses graphite powder for a negative electrode of a lithium ion secondary battery, but does not provide an alternative to the above-described problems.

[PRIOR ART DOCUMENT]

[PATENT DOCUMENT]

Japanese Patent No. 4403327.

Furthermore, other relevant documents are EP2945209B1, EP3641034A1 and KR20170048210A.

## DISCLOSURE OF THE INVENTION

### TECHNICAL PROBLEM

An aspect of the present invention provides a negative electrode active material in which output characteristics and capacity characteristics are simultaneously improved and initial efficiency is high.

Another aspect of the present invention provides a negative electrode including the above-described negative electrode active material.

Another aspect of the present invention provides a secondary battery including the above-described negative electrode.

### TECHNICAL SOLUTION

According to an aspect of the present invention, there is provided a negative electrode active material including artificial graphite particles; and sulfur (S) distributed in the artificial graphite particles, wherein the sulfur is included in an amount of 15 ppm to 40 ppm, as defined in the appended claims.

According to another aspect of the present invention, there is provided a negative electrode including a negative electrode current collector; and a negative electrode active material layer disposed on the negative electrode current collector, wherein the negative electrode active material layer includes the above-described negative electrode active material.

According to another aspect of the present invention, there is provided a secondary battery including the above-described negative electrode; a positive electrode facing the negative electrode; a separator disposed between the negative electrode and the positive electrode; and an electrolyte.

### ADVANTAGEOUS EFFECTS

A negative electrode active material of the present invention is characterized in that it includes artificial graphite particles and sulfur distributed in the artificial graphite particles, wherein the sulfur is included in the negative electrode active material in an amount within a specific range. Since the sulfur distributed in the negative electrode active material within the above amount range is distributed in the negative electrode active material to play a role in randomizing a crystal structure of artificial graphite, a diffusion path of lithium ions may be smoothly secured to improve output characteristics of the negative electrode active material, and also, since the sulfur does not excessively increase a specific surface area of the negative electrode active material, initial efficiency may be improved and capacity of the negative electrode active material may be improved. Thus, a negative electrode and a secondary battery, which include the negative electrode active material of the present invention, may exhibit excellent performance in terms of output characteristics, capacity characteristics, and initial efficiency.

### MODE FOR CARRYING OUT THE INVENTION

It will be understood that words or terms used in the specification and claims shall not be interpreted as the meaning defined in commonly used dictionaries, and it will be further understood that the words or terms should be interpreted as having a meaning that is consistent with their meaning in the context of the relevant art and the technical idea of the invention, based on the principle that an inventor may properly define the meaning of the words or terms to best explain the invention.

The terminology used herein is for the purpose of describing particular example embodiments only and is not intended to be limiting of the present invention. In the specification, the terms of a singular form may include plural forms unless referred to the contrary.

It will be further understood that the terms "include", "comprise", or "have" when used in this specification, specify the presence of stated features, numbers, steps, elements, or combinations thereof, but do not preclude the presence or addition of one or more other features, numbers, steps, elements, or combinations thereof.

The expression "average particle diameter ($D_{50}$)" in the present specification may be defined as a particle diameter at a cumulative volume of 50% in a particle size distribution curve of particles. The average particle diameter ($D_{50}$), for example, may be measured by using a laser diffraction method. The laser diffraction method may generally measure a particle diameter ranging from a submicron level to a few mm and may obtain highly repeatable and high-resolution results.

Hereinafter, the present invention will be described in detail.

**Negative Electrode Active Material**

The present invention relates to a negative electrode active material, and particularly, to a negative electrode active material for a lithium secondary battery.

Specifically, the negative electrode active material according to the present invention includes artificial graphite particles; and sulfur (S) distributed in the artificial graphite particles, wherein the sulfur is included in an amount of 15 ppm to 40 ppm.

Conventionally, it is known that artificial graphite has a lower degree of occurrence of swelling than natural graphite and has excellent storage characteristics, but has inferior output characteristics. Research to reduce a particle diameter of the artificial graphite or increase an amount of a carbon coating layer is in progress in order to improve the output characteristics of the artificial graphite, but these methods are not desirable because these methods involve a problem of reducing capacity of the artificial graphite or reducing initial efficiency.

A raw material (coke, etc.) of the artificial graphite contains impurities such as sulfur (S) and nitrogen (N), and the impurities are mostly removed during a graphitization process of the raw material. Although the removal of these impurities has an advantage of improving the initial efficiency and the capacity, there is a problem in that the output characteristics of the artificial graphite are degraded due to excessive development of a crystal structure of the artificial graphite.

In order to solve this problem, the negative electrode active material of the present invention is characterized in that it includes artificial graphite particles and sulfur distributed in the artificial graphite particles, wherein the sulfur is included in the negative electrode active material in an amount within the above range. Since the sulfur distributed in the negative electrode active material within the above amount range is distributed in the negative electrode active material to play a role in randomizing the crystal structure of the artificial graphite, a diffusion path of lithium ions may be smoothly secured to improve output characteristics of the negative electrode active material, and also, since the sulfur does not excessively increase a specific surface area of the negative electrode active material, initial efficiency may be improved and capacity of the negative electrode active material may be improved. Thus, a negative electrode and a secondary battery, which include the negative electrode active material of the present invention, may exhibit excellent performance in terms of output characteristics, capacity characteristics, and initial efficiency.

The negative electrode active material includes artificial graphite particles.

The artificial graphite particle is advantageous in that a degree of occurrence of swelling is lower than that of natural graphite and storage characteristics are excellent. Also, since the negative electrode active material according to the present invention includes a sulfur element at a desirable level in the artificial graphite particles as will be described later, the output characteristics may be improved to an excellent level without reducing the initial efficiency and capacity.

The artificial graphite particle may be an artificial graphite particle in the form of a secondary particle in which a plurality of primary artificial graphite particles are bonded. Specifically, the artificial graphite particle may be a bonded body of the plurality of primary artificial graphite particles. In a case in which the artificial graphite particle is the artificial graphite particle in the form of a secondary particle, since voids are formed between the primary artificial graphite particles, the output characteristics of the artificial graphite particles may be further improved by securing these voids.

With respect to the artificial graphite particle in the form of a secondary particle, the secondary particle may be the bonded body of the plurality of primary artificial graphite particles, and, specifically, in the artificial graphite particle in the form of a secondary particle, the primary artificial graphite particles are not bonded to each other by van der Waals force, but the plurality of primary artificial graphite particles may be bonded or aggregated with a resin binder, such as pitch, to form the secondary particle.

The primary artificial graphite particles may be formed after powdering a carbon precursor. The carbon precursor may be at least one selected from the group consisting of coal-based heavy oil, fiber-based heavy oil, tars, pitches, and cokes. Since the primary artificial graphite particles formed of the powdered carbon precursor may have improved cohesiveness, primary artificial graphite particles having high hardness may be formed.

The artificial graphite particles in the form of secondary particles may be formed by adding the carbon precursor in the form of powder to a reactor, operating the reactor to bond the powder by a centrifugal force to form secondary particles in which primary particles are bonded, and performing graphitization at a temperature of 2,500°C to 3,500°C, for example, at a temperature of 2,700°C to 3,200 °C. In the graphitization process, graphitization of the primary particles and the secondary particles may be performed at the same time. In a process of bonding the powder, a resin binder, such as pitch, may be added to the reactor together, and a heat treatment may be performed at a temperature of about 400°C to 800°C.

In the case that the artificial graphite particle is an artificial graphite particle in the form of a secondary particle, an average particle diameter ($D_{50}$) of the primary artificial graphite particles may be in a range of 5 $\mu$m to 15 $\mu$m, for example, 8.7 $\mu$m to 12.0 $\mu$m. When the primary artificial graphite particles have an average particle diameter ($D_{50}$) in the above range, it is desirable because output and capacity characteristics may be simultaneously improved.

The negative electrode active material includes sulfur (S) distributed in the artificial graphite particles. The sulfur is included in the negative electrode active material in an amount of 15 ppm to 40 ppm.

In general, the sulfur is treated as an impurity, and may be removed in graphitization and deironization processes during preparation of artificial graphite, and, for example, a process of removing the impurity is performed by heat treating at a high temperature of 1,000°C to 1,500°C before grinding a raw material (cokes, etc.) during the preparation of the artificial graphite. However, with respect to the negative electrode active material of the present invention, the sulfur may be distributed in a desired amount in the artificial graphite particles to play a role in randomizing the crystal structure of the artificial graphite particle, and, accordingly, the diffusion path of lithium ions of the artificial graphite particles may be increased to improve the output characteristics. Particularly, since the raw material (coke, etc.) used during the preparation of particles of the artificial graphite has a mosaic phase rather than a fibrous phase due to the inclusion of the sulfur and, as a result, has randomness of the crystal structure, lithium ion diffusion resistance may be reduced. In a case in which the negative electrode active material excessively includes sulfur, an electrolyte solution side reaction is intensified and initial efficiency is reduced due to an increase in the specific surface area of the negative electrode active material, and a degree of graphitization may be reduced and capacity may be reduced due to an excessive increase in a ratio of the isotropic mosaic phase, but, since the negative electrode active material of the present invention does not excessively include sulfur, the capacity and the initial efficiency may be improved.

If, in a case in which the sulfur is included in the negative electrode active material in an amount of less than 15 ppm, since the crystal structure of the artificial graphite particle may not be randomized, diffusivity of lithium ions may be reduced and the output characteristics may be degraded. If, in a case in which the sulfur is included in the negative electrode active material in an amount of greater than 40 ppm, the specific surface area of the artificial graphite is increased due to the excessive amount of the sulfur, there is a concern that, as a result, an excessive side reaction with an electrolyte solution and a reduction in the initial efficiency may occur, and the degree of graphitization is reduced and the capacity of the negative electrode active material is reduced due to the excessive isotropic mosaic phase in the artificial graphite particles, thus is not desirable.

The sulfur may be included in an amount of preferably 18 ppm to 30 ppm, more preferably 19.0 ppm to 25.5 ppm, and most preferably 20.0 ppm to 22.5 ppm in the negative electrode active material. When the amount of the sulfur is within the above range, an effect of simultaneously improving the output characteristics, the capacity characteristics, and the initial efficiency of the negative electrode active material may be preferably achieved.

The sulfur may be distributed on a surface and/or inside the artificial graphite particle. More specifically, the sulfur may be distributed in the crystal structure of the artificial graphite particles.

The amount of the sulfur according to the present invention may be achieved by a method in which heat treatment conditions of the graphitization and deironization processes are controlled during the preparation of the artificial graphite particles, a calcination process generally performed during preparation of artificial graphite is not performed, or calcination conditions are controlled. Specifically, the amount of the sulfur according to the present invention may be achieved by not performing the calcination process performed before the grinding of the artificial graphite raw material (coke, etc.), or by performing the calcination process at a low temperature of 500°C or less, preferably, 300°C or less, in a preparation process of the artificial graphite particles.

The amount of the sulfur may be measured by an inductively coupled plasma (ICP) analysis method.

A spacing d002 of a crystal plane, which is measured by X-ray diffraction (XRD) analysis of the artificial graphite particles, may be in a range of 0.3354 nm to 0.3370 nm, preferably 0.3357 nm to 0.3360 nm, and more preferably 0.3357 nm or more to less than 0.3360 nm, and, when the spacing d002 is within the above range, it is desirable because the capacity of the negative electrode active material may be secured.

Also, a crystallite size determined by a full width at half maximum of a peak of a (002) plane in an X-ray diffraction spectrum of the artificial graphite particles may be in a range of 60 nm or more, preferably 60 nm to 200 nm, and more preferably 60 nm to 120 nm. When the crystallite size is within the above range, a negative electrode active material having life and output characteristics ensured may be achieved.

After XRD analysis is performed on the negative electrode active material using an X-ray diffraction (XRD) analyzer and a full width at half maximum and an angle ($\theta$) of the (002) peak of the artificial graphite particle are obtained through the XRD analysis, the crystallite size may be obtained by substituting the full width at half maximum and the angle ($\theta$) into the Scherrer equation.

```
[Scherrer equation]

Crystallite size(nm) = K × λ / FWHM × Cos θ
```

In the above equation, K is a Scherrer constant, $\lambda$ is a wavelength of a light source, FWHM is the full width at half maximum of the (002) peak of the artificial graphite particle during XRD analysis, and Cos $\theta$ is a cosine value of the angle $\theta$ corresponding to the (002) peak of the artificial graphite particle.

The negative electrode active material may further include a carbon coating layer disposed on the artificial graphite particles. The carbon coating layer may contribute to improve structural stability of the artificial graphite particle and prevent a side reaction between the negative electrode active material and the electrolyte solution.

The carbon coating layer may be included in an amount of 0.1 wt% to 5 wt%, for example, 1 wt% to 4 wt% in the negative electrode active material. The presence of the carbon coating layer may improve the structural stability of the negative electrode active material, but, since there is a concern that excessive formation of the carbon coating layer causes degradation of high-temperature storage performance and the reduction in the initial efficiency due to an increase in the specific surface area during rolling of the negative electrode, it is desirable to form the carbon coating layer within the above-described amount range.

The carbon coating layer may include amorphous carbon. For example, after at least one carbon coating layer precursor selected from the group consisting of coal-based heavy oil, fiber-based heavy oil, tars, pitches, and cokes is provided to the artificial graphite particles, the carbon coating layer may be formed by heat treating the carbon coating layer precursor. A heat treatment process for forming the carbon coating layer may be performed at 1,000°C to 1,500°C in terms of promoting uniform formation of the carbon coating layer.

The negative electrode active material may have an average particle diameter ($D_{50}$) of 10 $\mu$m to 25 $\mu$m, preferably 12 $\mu$m to 20 $\mu$m, and more preferably 16 $\mu$m to 19 $\mu$m. Particularly, in a case in which the negative electrode active material includes artificial graphite particles in the form of secondary particles and has an average particle diameter within the above range, it may be evaluated that the secondary particles are smoothly assembled, and, since an orientation index of the negative electrode is reduced to an appropriate level, the output characteristics may be excellent, occurrence of a swelling phenomenon may be prevented, and processability in preparation of the negative electrode may be improved.

The negative electrode active material may have a Brunauer-Emmett-Teller (BET) specific surface area of 0.3 $m^2$/g to 2.5 $m^2$/g, for example, 0.5 $m^2$/g to 1.1 $m^2$/g, and, when the BET specific surface area is within the above range, it is desirable in terms of being able to further improve the initial efficiency by preventing the side reaction with the electrolyte solution.

The negative electrode active material may have a true density 2.2 $g/cm^3$ to 2.3 $g/cm^3$, preferably 2.22 $g/cm^3$ to 2.26 $g/cm^3$, and more preferably 2.23 $g/cm^3$ to 2.25 $g/cm^3$, and, when the true density is within the above range, the negative electrode active material is evaluated to have a desirable level of the degree of graphitization, and discharge capacity may be secured, thus it is desirable.

The true density is defined as density of the particle itself excluding a gap between the particles, and, after a true volume of the particles is measured using a gas pycnometer, the true density may be calculated by dividing a mass of the particles by the true volume.

## Negative Electrode

Also, the present invention provides a negative electrode including the above-described negative electrode active material, more particularly, a negative electrode for a lithium secondary battery.

The negative electrode includes a negative electrode current collector; and a negative electrode active material layer disposed on the negative electrode current collector. The negative electrode active material layer includes the above-described negative electrode active material.

A negative current collector generally used in the art may be used without limitation as the negative electrode current collector, and, for example, the negative electrode current collector is not particularly limited so long as it has high conductivity without causing adverse chemical changes in the lithium secondary battery. For example, the negative electrode current collector may include at least one selected from copper, stainless steel, aluminum, nickel, titanium, fired carbon, and an aluminum-cadmium alloy, preferably, copper.

The negative electrode current collector may have fine surface roughness to improve bonding strength with the negative electrode active material, and the negative electrode current collector may be used in various shapes such as a film, a sheet, a foil, a net, a porous body, a foam body, a non-woven fabric body, and the like.

The negative electrode current collector generally may have a thickness of 3 $\mu$m to 500 $\mu$m.

The negative electrode active material layer is stacked on the negative electrode current collector and includes the above-described negative electrode active material.

The negative electrode active material may be included in an amount of 80 wt% to 99 wt%, for example, 93 wt% to 98 wt% in the negative electrode active material layer.

The negative electrode active material layer may further include a binder, a conductive agent, and/or a thickener in addition to the above-described negative electrode active material.

The binder is a component that assists in the binding between the active material and/or the current collector, wherein the binder may commonly be included in an amount of 1 wt% to 30 wt%, for example, 1 wt% to 10 wt% in the negative electrode active material layer.

The binder may include at least one selected from the group consisting of polyvinylidene fluoride (PVDF), polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene polymer (EPDM), a sulfonated EPDM, a styrene-butadiene rubber, and a fluorine rubber, preferably, at least one selected from polyvinylidene fluoride and a styrene-butadiene rubber.

Any thickener used in a conventional lithium secondary battery may be used as the thickener, and an example thereof is carboxymethyl cellulose (CMC).

The conductive agent is a component for further improving the conductivity of the negative electrode active material, wherein the conductive agent may be included in an amount of 1 wt% to 30 wt%, for example, 1 wt% to 10 wt% in the negative electrode active material layer.

Any conductive agent may be used without particular limitation so long as it has conductivity without causing adverse chemical changes in the battery, and, for example, a conductive material, such as: graphite such as natural graphite or artificial graphite; carbon black such as acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may include acetylene black-based products (Chevron Chemical Company, Denka black (Denka Singapore Private Limited), or Gulf Oil Company), Ketjen black, ethylene carbonate (EC)-based products (Armak Company), Vulcan XC-72 (Cabot Company), and Super P (Timcal Graphite & Carbon).

The negative electrode active material layer may be prepared by mixing the above-described negative electrode active material and at least one selected from the binder, the conductive agent, and the thickener in a solvent to prepare a negative electrode slurry, and then coating the negative electrode current collector with the negative electrode slurry, and rolling and drying the coated negative electrode current collector.

The solvent may include water or an organic solvent, such as N-methyl-2-pyrrolidone (NMP), and may be used in an amount such that desirable viscosity is obtained when the negative electrode active material as well as optionally the binder and the conductive agent are included. For example, the solvent may be included in an amount such that a concentration of a solid content including the negative electrode active material as well as optionally at least one selected from the binder, the thickener, and the conductive agent is in a range of 50 wt% to 95 wt%, for example, 70 wt% to 90 wt%.

An area ratio $I(004)/I(110)$ (orientation index) during X-ray diffraction analysis of the negative electrode may be in a range of 8 to 14, for example, 11.5 to 12.5. When the area ratio $I(004)/I(110)$ is within the above-described range, since the active material particles may be arranged to minimize the diffusion path of lithium ions, an effect of reducing the lithium ion diffusion resistance may be achieved at an excellent level. The orientation index may be achieved by using the above-described negative electrode active material in the negative electrode.

## Secondary Battery

Furthermore, the present invention provides a secondary battery including the above-described negative electrode, more particularly, a lithium secondary battery.

The secondary battery may include the above-described negative electrode; a positive electrode facing the negative electrode, a separator disposed between the negative electrode and the positive electrode, and an electrolyte.

The positive electrode may include a positive electrode current collector; and a positive electrode active material layer disposed on the positive electrode current collector.

A positive current collector generally used in the art may be used without limitation as the positive electrode current collector, and, for example, the positive electrode current collector is not particularly limited so long as it has high conductivity without causing adverse chemical changes in the secondary battery. For example, the positive electrode current collector may include at least one selected from copper, stainless steel, aluminum, nickel, titanium, fired carbon, and an aluminum-cadmium alloy, preferably, aluminum.

The positive electrode current collector may have fine surface roughness to improve bonding strength with the positive electrode active material, and the positive electrode current collector may be used in various shapes such as a film, a sheet, a foil, a net, a porous body, a foam body, a non-woven fabric body, and the like.

The positive electrode current collector generally may have a thickness of 3 $\mu$m to 500 $\mu$m.

The positive electrode active material layer may include a positive electrode active material.

The positive electrode active material is a compound capable of reversibly intercalating and deintercalating lithium, wherein the positive electrode active material may specifically include a lithium composite metal oxide including lithium and at least one metal such as cobalt, manganese, nickel, or aluminum. More specifically, the lithium composite metal oxide may include lithium-manganese-based oxide (e.g., $LiMnO_2$, $LiMn_2O_4$, etc.), lithium-cobalt-based oxide (e.g., $LiCoO_2$, etc.), lithium-nickel-based oxide (e.g., $LiNiO_2$, etc.), lithium-nickel-manganese-based oxide (e.g., $LiNi_{1-Y}Mn_YO_2$ (where $0<Y<1$), $LiMn_{2-Z}Ni_ZO_4$ (where $0<Z<2$), etc.), lithium-nickel-cobalt-based oxide (e.g., $LiNi_{1-Y1}Co_{Y1}O_2$ (where $0<Y1<1$), etc.), lithium-manganese-cobalt-based oxide (e.g., $LiCo_{1-Y2}Mn_{Y2}O_2$ (where $0<Y2<1$), $LiMn_{2-Z1}Co_{z1}O_4$ (where $0<Z1<2$), etc.), lithium-nickel-manganese-cobalt-based oxide (e.g., $Li(Ni_pCo_qMn_{r1})O_2$ (where $0<p<1$, $0<q<1$, $0<r1<1$, and $p+q+r1=1$) or $Li(Ni_{p1}Co_{q1}Mn_{r2})O_4$ (where $0<p1<2$, $0<q1<2$, $0<r2<2$, and $p1+q1+r2=2$), etc.), or lithium-nickel-cobalt-transition metal (M) oxide (e.g., $Li(Ni_{p2}Co_{q2}Mn_{r3}M_{s2})O_2$ (where M is selected from the group consisting of aluminum (Al), iron (Fe), vanadium (V), chromium (Cr), titanium (Ti), tantalum (Ta), magnesium (Mg), and molybdenum (Mo), and p2, q2, r3, and s2 are atomic fractions of each independent elements, wherein $0<p2<1$, $0<q2<1$, $0<r3<1$, $0<S2<1$, and $p2+q2+r3+S2=1$), etc.), and any one thereof or a mixture of two or more thereof may be included. Among these materials, in terms of the improvement of capacity characteristics and stability of the battery, the lithium composite metal oxide may include $LiCoO_2$, $LiMnO_2$, $LiNiO_2$, lithium nickel manganese cobalt oxide (e.g., $Li(Ni_{0.6}Mn_{0.2}Co_{0.2})O_2$, $Li(Ni_{0.3}Mn_{0.3}CO_{0.2})O_2$, or $Li(Ni_{0.8}Mn_{0.1}Co_{0.1})O_2$), or lithium nickel cobalt aluminum oxide (e.g., $LiNi_{0.8}Co_{0.15}Al_{0.05}O_2$, etc.), and, in consideration of a significant improvement due to the control of type and content ratio of elements constituting the lithium composite metal oxide, the lithium composite metal oxide may include $Li(Ni_{0.6}Mn_{0.2}Co_{0.2})O_2$, $Li(Ni_{0.5}Mn_{0.3}Co_{0.2})O_2$, $Li(Ni_{0.7}Mn_{0.15}Co_{0.15})O_2$, or $Li(Ni_{0.8}Mn_{0.1}Co_{0.1})O_2$, and any one thereof or a mixture of two or more thereof may be used.

The positive electrode active material may be included in an amount of 80 wt% to 99 wt% in the positive electrode active material layer.

The positive electrode active material layer may further include at least one selected from a binder and a conductive agent together with the positive electrode active material.

The binder is a component that assists in the binding between the active material and the conductive agent and in the binding with the current collector, wherein the binder is commonly added in an amount of 1 wt% to 30 wt% based on a total weight of a positive electrode material mixture. Examples of the binder may be at least one selected from the group consisting of polyvinylidene fluoride, polyvinyl alcohol, carboxymethyl cellulose (CMC), starch, hydroxypropyl cellulose, regenerated cellulose, polyvinylpyrrolidone, polytetrafluoroethylene, polyethylene, polypropylene, an ethylene-propylene-diene terpolymer (EPDM), a sulfonated EPDM, a styrene-butadiene rubber, and a fluorine rubber.

The binder may be included in an amount of 1 wt% to 30 wt% in the positive electrode active material layer.

Any conductive agent may be used without particular limitation so long as it has conductivity without causing adverse chemical changes in the battery, and, for example, a conductive material, such as: graphite; a carbon-based material such as carbon black, acetylene black, Ketjen black, channel black, furnace black, lamp black, and thermal black; conductive fibers such as carbon fibers or metal fibers; fluorocarbon; metal powder such as aluminum powder, and nickel powder; conductive whiskers such as zinc oxide whiskers and potassium titanate whiskers; conductive metal oxide such as titanium oxide; or polyphenylene derivatives, may be used. Specific examples of a commercial conductive agent may include acetylene black-based products (Chevron Chemical Company, Denka black (Denka Singapore Private Limited), or Gulf Oil Company), Ketjen black, ethylene carbonate (EC)-based products (Armak Company), Vulcan XC-72 (Cabot Company), and Super P (Timcal Graphite & Carbon).

The conductive agent may be added in an amount of 1 wt% to 30 wt% in the positive electrode active material layer.

The separator separates the negative electrode and the positive electrode and provides a movement path of lithium ions, wherein any separator may be used as the separator without particular limitation as long as it is typically used in a secondary battery, and particularly, a separator having high moisture-retention ability for an electrolyte as well as low resistance to the transfer of electrolyte ions may be used. Specifically, a porous polymer film, for example, a porous polymer film prepared from a polyolefin-based polymer, such as an ethylene homopolymer, a propylene homopolymer, an ethylene/butene copolymer, an ethylene/hexene copolymer, and an ethylene/methacrylate copolymer, or a laminated structure having two or more layers thereof may be used. Also, a typical porous nonwoven fabric, for example, a nonwoven fabric formed of high melting point glass fibers or polyethylene terephthalate fibers may be used. Furthermore, a coated separator including a ceramic component or a polymer component may be used to secure heat resistance or mechanical strength, and the separator having a single layer or multilayer structure may be selectively used.

Also, the electrolyte used in the present invention may include an organic liquid electrolyte, an inorganic liquid electrolyte, a solid polymer electrolyte, a gel-type polymer electrolyte, a solid inorganic electrolyte, or a molten-type inorganic electrolyte which may be used in the preparation of the lithium secondary battery, but the present invention is not limited thereto.

Specifically, the electrolyte may include an organic solvent and a lithium salt.

Any organic solvent may be used as the organic solvent without particular limitation so long as it may function as a medium through which ions involved in an electrochemical reaction of the battery may move. Specifically, an ester-based solvent such as methyl acetate, ethyl acetate, $\gamma$-butyrolactone, and $\varepsilon$-caprolactone; an ether-based solvent such as dibutyl ether or tetrahydrofuran; a ketone-based solvent such as cyclohexanone; an aromatic hydrocarbon-based solvent such as benzene and fluorobenzene; or a carbonate-based solvent such as dimethyl carbonate (DMC), diethyl carbonate (DEC), ethylmethyl carbonate (EMC), ethylene carbonate (EC), and propylene carbonate (PC); an alcohol-based solvent such as ethyl alcohol and isopropyl alcohol; nitriles such as R-CN (where R is a linear, branched, or cyclic C2-C20 hydrocarbon group and may include a double-bond aromatic ring or ether bond); amides such as dimethylformamide; dioxolanes such as 1,3-dioxolane; or sulfolanes may be used as the organic solvent. Among these solvents, the carbonate-based solvent may be preferably used, and, for example, a mixture of a cyclic carbonate (e.g., ethylene carbonate or propylene carbonate) having high ionic conductivity and high dielectric constant and a low-viscosity linear carbonate-based compound (e.g., ethylmethyl carbonate, dimethyl carbonate, or diethyl carbonate) may be preferably used, said mixture may increase charge/discharge performance of the battery. In this case, the performance of the electrolyte solution may be excellent when the cyclic carbonate and the chain carbonate are mixed in a volume ratio of about 1:1 to about 1:9.

The lithium salt may be used without particular limitation as long as it is a compound capable of providing lithium ions used in the lithium secondary battery. Specifically, $LiPF_6$, $LiClO_4$, $LiAsF_6$, $LiBF_4$, $LiSbF_6$, $LiAlO_4$, $LiAlCl_4$, $LiCF_3SO_3$, $LiC_4F_9SO_3$, $LiN(C_2F_5SO_3)_2$, $LiN(C_2F_5SO_2)_2$, $LiN(CF_3SO_2)_2$, $LiCl$, $LiI$, or $LiB(C_2O_4)_2$ may be used as the lithium salt. The lithium salt may be used in a concentration range of 0.1 M to 2.0 M. In a case in which the concentration of the lithium salt is included within the above range, since the electrolyte may have appropriate conductivity and viscosity, excellent performance of the electrolyte may be obtained and lithium ions may effectively move.

As described above, since the lithium secondary battery according to the present invention stably exhibits excellent discharge capacity, output characteristics, and life characteristics, the lithium secondary battery is suitable for portable devices, such as mobile phones, notebook computers, and digital cameras, and electric cars such as hybrid electric vehicles (HEVs) and particularly, may be preferably used as a constituent battery of a medium and large sized battery module. Thus, the present invention also provides a medium and large sized battery module including the above-described secondary battery as a unit cell.

The medium and large sized battery module may be preferably used in power sources that require high output and large capacity, such as an electric vehicle, a hybrid electric vehicle, and a power storage system.

Hereinafter, examples of the present invention will be described in detail in such a manner that it may easily be carried out by a person with ordinary skill in the art to which the present invention pertains. The invention may, however, be embodied in many different forms and should not be construed as being limited to the examples set forth herein.

## **Examples**

### **1. Preparation of Negative Electrode Active Material**

Example 1: Preparation of Negative Electrode Active Material

Powder having an average particle diameter ($D_{50}$) of 10 $\mu$m was obtained by grinding needle coke using an impact mill. A separate calcination process was not performed during the grinding of the needle coke. The powder and petroleum-based pitch were mixed in a weight ratio of 92:8, and secondary particles, in which a plurality of primary particles were agglomerated or bonded, were prepared by performing a heat treatment at 550°C for 10 hours in an inert gas ($N_2$) atmosphere using a vertical granulator (average particle diameter ($D_{50}$): 15.5 $\mu$m).

Next, the secondary particles were graphitized by performing a heat treatment at 3,000°C for 20 hours or more in an inert gas atmosphere to prepare artificial graphite particles in the form of a secondary particle.

The artificial graphite particles in the form of a secondary particle and petroleum-based pitch were mixed and heat-treated at 1,300°C in a roller hearth kiln to form an amorphous carbon coating layer on the secondary particles.

A negative electrode active material thus prepared had a sulfur content of 23.1 ppm, an average particle diameter ($D_{50}$) of 15.5 $\mu$m, a true density of 2.24 g/cm$^3$, and a BET specific surface area of 0.8 m$^2$/g, and an amount of the amorphous carbon coating layer in the negative electrode active material was 3 wt%.

Also, d002, which was measured by XRD of the artificial graphite particles included in the negative electrode active material, was 0.3358 nm, and a crystallite size, which was determined by a full width at half maximum of a peak of a (002) plane, was 75 nm.

\* The d002 of the artificial graphite particle was obtained by the Bragg equation using a Bragg 2θ angle at which the peak of the (002) plane appeared in an X-ray diffraction spectrum, after XRD analysis of the negative electrode active material.

\* The crystallite size, which was determined by the full width at half maximum of the peak of the (002) plane of the artificial graphite particles, was obtained from the Scherrer equation by using the full width at half maximum of the peak of the (002) plane in the X-ray diffraction spectrum. Detailed conditions are as follows.

1) Type and wavelength of a light source: a wavelength of X-ray generated from Cu Kα was used, and the wavelength (λ) of the light source was 0.15406 nm.

2) Sample preparation method: 0.3 g of the negative electrode active material was put in a cylindrical holder having a diameter of 2.5 cm and a height of 2.5 mm, and planarization was performed with a slide glass so that a height of a sample in the holder was constant to prepare the sample for XRD analysis.

3) XRD analyzer setting conditions: scan time was set to 1 hour and 15 minutes, and a measurement range was set to a region where 2θ was 10° to 90°, and step time and step size were set to scan at a rate (2θ) of 0.02° per second. In this case, in order to measure the peak of the (002) plane of the artificial graphite particles, a peak in a region where 2θ was 26.3° to 26.5° was measured.

Thereafter, the crystallite size of the artificial graphite particles was calculated using the Scherrer equation below.

$$[\text{Scherrer equation}]$$

$$\text{Crystallite size(nm)} = K \times \lambda / \text{FWHM} \times \text{Cos } \theta$$

In the above equation, K is a Scherrer constant, $\lambda$ is the wavelength of the light source, FWHM is the full width at half maximum of the (002) peak of the artificial graphite particle during XRD analysis, and Cos $\theta$ is a cosine value of the angle $\theta$ corresponding to the (002) peak of the artificial graphite particle.

Example 2: Preparation of Negative Electrode Active Material

Powder having an average particle diameter ($D_{50}$) of 9 $\mu$m was obtained by heat treating needle coke up to 200°C at a heating rate of 10°C/min and grinding the needle coke using an impact mill. The powder and petroleum-based pitch were mixed in a weight ratio of 90:10, and secondary particles, in which a plurality of primary particles were agglomerated, were prepared by performing a heat treatment at 600°C for 8 hours in an inert gas ($N_2$) atmosphere using a vertical granulator (average particle diameter ($D_{50}$): 13.5 $\mu$m).
Next, the secondary particles were graphitized by performing a heat treatment at 3,000°C for 20 hours or more in an inert gas atmosphere to prepare artificial graphite particles in the form of a secondary particle.
The artificial graphite particles in the form of a secondary particle and petroleum-based pitch were mixed and heat-treated at 1,250°C in a roller hearth kiln to form an amorphous carbon coating layer on the secondary particles.
A negative electrode active material thus prepared had a sulfur content of 26.2 ppm, an average particle diameter ($D_{50}$) of 13.5 $\mu$m, a true density of 2.24 g/cm$^3$, and a BET specific surface area of 1.0 m$^2$/g, and an amount of the amorphous carbon coating layer in the negative electrode active material was 3 wt%.
Also, d002, which was measured by XRD of the artificial graphite particles included in the negative electrode active material, was 0.3359 nm, and a crystallite size, which was determined by a full width at half maximum of a peak of a (002) plane, was 64 nm.

Example 3: Preparation of Negative Electrode Active Material

Powder having an average particle diameter ($D_{50}$) of 11 $\mu$m was obtained by grinding petroleum-based coke using an impact mill. A separate calcination process was not performed during the grinding of the conventional coke. Secondary particles, in which a plurality of primary particles were agglomerated, were prepared by performing a heat treatment on the powder at 600°C for 10 hours in an inert gas ($N_2$) atmosphere using a vertical granulator (average particle diameter ($D_{50}$): 18.1 $\mu$m).
Next, the secondary particles were graphitized by performing a heat treatment at 3,000°C for 20 hours or more in an inert gas atmosphere to prepare artificial graphite particles in the form of a secondary particle.
The artificial graphite particles in the form of a secondary particle and petroleum-based pitch were mixed and heat-treated at 1,300°C in a roller hearth kiln to form an amorphous carbon coating layer on the secondary particles.
A negative electrode active material thus prepared had a sulfur content of 22.2 ppm, an average particle diameter ($D_{50}$) of 18.1 $\mu$m, a true density of 2.23 g/cm$^3$, and a BET specific surface area of 0.7 m$^2$/g, and an amount of the amorphous carbon coating layer in the negative electrode active material was 3 wt%.
Also, d002, which was measured by XRD of the artificial graphite particles included in the negative electrode active material, was 0.3358 nm, and a crystallite size, which was determined by a full width at half maximum of a peak of a (002) plane, was 69 nm.

Example 4: Preparation of Negative Electrode Active Material

A negative electrode active material was prepared in the same manner as in Example 3 except that powder having an average particle diameter ($D_{50}$) of 10 $\mu$m was obtained by grinding petroleum-based coke using an impact mill.
The negative electrode active material thus prepared had a sulfur content of 29.4 ppm, an average particle diameter ($D_{50}$) of 19.4 $\mu$m, a true density of 2.24 g/cm$^3$, and a BET specific surface area of 0.6 m$^2$/g, and an amount of an amorphous carbon coating layer in the negative electrode active material was 3 wt%.
Also, d002, which was measured by XRD of the artificial graphite particles included in the negative electrode active material, was 0.3359 nm, and a crystallite size, which was determined by a full width at half maximum of a peak of a (002) plane, was 66 nm.

Comparative Example 1: Preparation of Negative Electrode Active Material

Powder having an average particle diameter ($D_{50}$) of 10 $\mu$m was obtained by heat treating needle coke up to 1,000°C at a heating rate of 25°C/min and grinding the needle coke using an impact mill. The powder and petroleum-based pitch were mixed in a weight ratio of 87:13, and secondary particles, in which a plurality of primary particles were agglomerated, were prepared by performing a heat treatment at 550°C for 10 hours in an inert gas ($N_2$) atmosphere using a vertical granulator (average particle diameter ($D_{50}$): 22.8 $\mu$m).

Next, the secondary particles were graphitized by performing a heat treatment at 3,000°C for 20 hours or more in an inert gas atmosphere to prepare artificial graphite particles in the form of a secondary particle.

The artificial graphite particles in the form of a secondary particle and petroleum-based pitch were mixed and heat-treated at 1,300°C in a roller hearth kiln to form an amorphous carbon coating layer on the secondary particles.

A negative electrode active material thus prepared had a sulfur content of 9.4 ppm, an average particle diameter ($D_{50}$) of 22.8 $\mu$m, a true density of 2.24 g/cm$^3$, and a BET specific surface area of 0.7 m$^2$/g, and an amount of the amorphous carbon coating layer in the negative electrode active material was 3 wt%.

Also, d002, which was measured by XRD of the artificial graphite particles included in the negative electrode active material, was 0.3358 nm, and a crystallite size, which was determined by a full width at half maximum of a peak of a (002) plane, was 71 nm.

Comparative Example 2: Preparation of Negative Electrode Active Material

A negative electrode active material was prepared in the same manner as in Comparative Example 1 except that powder having an average particle diameter ($D_{50}$) of 8.5 $\mu$m was obtained by heat treating needle coke up to 1,400°C at a heating rate of 25°C/min and grinding the needle coke using a roll mill.

The negative electrode active material thus prepared had a sulfur content of 8.3 ppm, an average particle diameter ($D_{50}$) of 17.9 $\mu$m, a true density of 2.25 g/cm$^3$, and a BET specific surface area of 0.8 m$^2$/g, and an amount of an amorphous carbon coating layer in the negative electrode active material was 3 wt%.

Also, d002, which was measured by XRD of the artificial graphite particles included in the negative electrode active material, was 0.3358 nm, and a crystallite size, which was determined by a full width at half maximum of a peak of a (002) plane, was 78 nm.

Comparative Example 3: Preparation of Negative Electrode Active Material

A negative electrode active material was prepared in the same manner as in Comparative Example 1 except that powder having an average particle diameter ($D_{50}$) of 9.5 $\mu$m was obtained by heat treating needle coke up to 1,500°C at a heating rate of 25°C/min and grinding the needle coke using a roll mill and a mixing weight ratio of the artificial graphite particles in the form of a secondary particle to petroleum-based pitch was adjusted so that an amount of an amorphous carbon coating layer in the negative electrode active material was 4 wt%.

The negative electrode active material thus prepared had a sulfur content of 10.2 ppm, an average particle diameter ($D_{50}$) of 19.7 $\mu$m, a true density of 2.25 g/cm$^3$, and a BET specific surface area of 0.6 m$^2$/g, and the amount of the amorphous carbon coating layer in the negative electrode active material was 4 wt%.

Also, d002, which was measured by XRD of the artificial graphite particles included in the negative electrode active material, was 0.3358 nm, and a crystallite size, which was determined by a full width at half maximum of a peak of a (002) plane, was 81 nm.

Comparative Example 4: Preparation of Negative Electrode Active Material

Powder having an average particle diameter ($D_{50}$) of 14.6 $\mu$m was obtained by grinding petroleum-based coke using an impact mill. Next, a heat treatment was performed at 2,400°C in an inert gas ($N_2$) atmosphere to prepare a negative electrode active material (soft carbon) of Comparative Example 4.

The negative electrode active material thus prepared had a sulfur content of 74.0 ppm, an average particle diameter ($D_{50}$) of 14.6 $\mu$m, a true density of 2.12 g/cm$^3$, and a BET specific surface area of 1.9 m$^2$/g.

Also, d002, which was measured by XRD of soft carbon particles included in the negative electrode active material, was 0.348 nm.

Comparative Example 5: Preparation of Negative Electrode Active Material

A negative electrode active material was prepared in the same manner as in Example 1 except that powder having an average particle diameter ($D_{50}$) of 9.0 $\mu$m was obtained by grinding petroleum-based coke using an impact mill and an amorphous carbon coating layer was not formed on the artificial graphite in the form of a secondary particle.

The negative electrode active material thus prepared had a sulfur content of 52.0 ppm, an average particle diameter ($D_{50}$) of 15.2 $\mu$m, a true density of 2.20 g/cm$^3$, a d002 measured by XRD of 0.3380 nm, and a BET specific surface area of 1.2 m$^2$/g.

Also, the d002, which was measured by XRD of the artificial graphite particles included in the negative electrode active material, was 0.3380 nm, and a crystallite size, which was determined by a full width at half maximum of a peak of a (002) plane, was 20 nm.

## 2. Preparation of Negative Electrode

The negative electrode active material prepared in Example 1, carbon black as a conductive agent, a styrene-butadiene rubber as a binder, and carboxymethyl cellulose, as a thickener, were mixed in a weight ratio of 95.3: 1.0: 1.2: 2.5, and water was added to prepare a negative electrode slurry.

The negative electrode slurry was coated on a copper negative electrode current collector (thickness: 15 $\mu$m), vacuum dried at about 130°C for 8 hours, and rolled to form a negative electrode active material layer (thickness: 84 $\mu$m) to prepare a negative electrode of Example 1. In this case, the negative electrode was prepared such that a loading of the negative electrode was 3.6 mAh/cm$^2$.

Negative electrodes of Examples 2 to 4 and Comparative Examples 1 to 5 were prepared in the same manner as in Example 1 except that the negative electrode active materials prepared in Examples 2 to 4 and Comparative Examples 1 to 5 were respectively used.

An orientation index of each of the negative electrodes of the examples and the comparative examples was obtained as an area ratio I(004)/I(110) which was obtained by measuring a (004) plane and a (110) plane by XRD and integrating each XRD peak measured.

[Table 1]

| | Negative electrode active material | | | | | | Negative electrode |
| --- | --- | --- | --- | --- | --- | --- | --- |
| | Sulfur content (ppm) | Average particle diameter ($D_{50}$) ($\mu$m) | True density (g/cm$^3$) | d002 (nm) | Crystallite size (nm) | Specific surface area (m$^2$/g) | Orientati on index (I(004)/I (110)) |
| Example 1 | 23.1 | 15.5 | 2.24 | 0.3358 | 75 | 0.8 | 12.6 |
| Example 2 | 26.2 | 13.5 | 2.24 | 0.3359 | 64 | 1.0 | 11.2 |
| Example 3 | 22.2 | 18.1 | 2.23 | 0.3358 | 69 | 0.7 | 12.2 |
| Example 4 | 29.4 | 19.4 | 2.24 | 0.3359 | 66 | 0.6 | 10.0 |
| Comparative Example 1 | 9.4 | 22.8 | 2.24 | 0.3358 | 71 | 0.7 | 12.5 |
| Comparative Example 2 | 8.3 | 17.9 | 2.25 | 0.3358 | 78 | 0.8 | 15.5 |
| Comparative Example 3 | 10.2 | 19.7 | 2.25 | 0.3358 | 81 | 0.6 | 15.6 |
| Comparative Example 4 | 74.0 | 14.6 | 2.12 | 0.348 | - | 1.9 | 5.0 |
| Comparative Example 5 | 52.0 | 15.2 | 2.20 | 0.3380 | 20 | 1.2 | 7.0 |

## Experimental Examples

<Preparation of Secondary Battery>

A positive electrode slurry was prepared by mixing Li[Ni$_{0.6}$Mn$_{0.2}$Co$_{0.2}$]O$_2$ as a positive electrode active material, carbon black as a conductive agent, and PVdF, as a binder, in a weight ratio of 94:4:2 and adding N-methylpyrrolidone as a solvent, and the positive electrode slurry was coated on an aluminum foil, vacuum dried at about 130°C for 8 hours, and rolled to prepare a positive electrode. In this case, the positive electrode was prepared such that a loading of the positive electrode was 3.34 mAh/cm$^2$.

After a polyethylene separator was disposed between each of the negative electrodes prepared in Examples 1 to 4 and Comparative Examples 1 to 5 and the positive electrode, an electrolyte solution was injected to prepare secondary batteries of the examples and the comparative examples.

**Experimental Example 1: Output Characteristics Evaluation**

Output performances of the secondary batteries of the examples and the comparative examples prepared above were evaluated.

Specifically, a voltage change was measured by discharging each secondary battery, in a state in which a state of charge (SOC) of the negative electrode was 50%, at 2.5 C and 25°C, resistance was calculated by the equation "resistance = voltage/current", and the results thereof are presented in Table 2 below.

**Experimental Example 2: Discharge Capacity and Initial Efficiency Evaluation**

Charge capacity and discharge capacity of the secondary batteries of the examples and the comparative examples prepared above were measured, initial efficiency was calculated by the following equation, and the results thereof are presented in Table 2. Charging and discharging conditions are as follows.

Charging conditions: CCCV (constant current constant voltage) mode, 0.1 C charge, 5 mV and 1/200 C cut-off
Discharging conditions: CC mode, 0.1 C discharge, 1.5 V cut-off Initial efficiency = (discharge capacity/charge capacity in a 1$^{st}$ cycle) $\times$ 100

[Table 2]

|  | Resistance (mOhm) | Discharge capacity (mAh/g) | Initial efficiency (%) |
|---|---|---|---|
| Example 1 | 1814 | 352 | 93.0 |
| Example 2 | 1826 | 350 | 92.5 |
| Example 3 | 1781 | 351 | 93.0 |
| Example 4 | 1820 | 350 | 93.0 |
| Comparative Example 1 | 1900 | 350 | 93.0 |
| Comparative Example 2 | 1883 | 352 | 92.7 |
| Comparative Example 3 | 1915 | 353 | 92.8 |
| Comparative Example 4 | 1625 | 242 | 81.6 |
| Comparative Example 5 | 1730 | 329 | 90.5 |

Referring to Table 2, it may be confirmed that output characteristics, initial discharge capacities, and initial efficiencies of the negative electrodes and the secondary batteries, which included the negative electrode active materials of Examples 1 to 4, may be simultaneously improved.

With respect to the negative electrode active materials of Comparative Examples 1 to 3, since the amount of the sulfur included therein was excessively small, the crystal structure of the artificial graphite particle may not be randomized, and, accordingly, output characteristics were very poor.

With respect to the negative electrode active materials of Comparative Examples 4 and 5, since the amount of the sulfur included therein was excessively large, it may be confirmed that initial efficiency was reduced and capacity was reduced.

**Claims**

1. A negative electrode active material comprising:

artificial graphite particles; and

sulfur (S) distributed in the artificial graphite particles; and

a carbon coating layer disposed on the artificial graphite particles,

wherein the sulfur is included in the electrode active material in an amount of 15 ppm to 40 ppm,

wherein the artificial graphite particle is an artificial graphite particle in a form of a secondary particle in which a plurality of primary artificial graphite particles are bonded.

2. The negative electrode active material of claim 1, wherein the primary artificial graphite particles have an average particle diameter ($D_{5C}$) of 5 $\mu$m to 15 $\mu$m, measured by using a laser diffraction method.

3. The negative electrode active material of claim 1, wherein the sulfur is distributed in a crystal structure of the artificial graphite particles.

4. The negative electrode active material of claim 1, wherein the carbon coating layer is included in an amount of 0.1 wt% to 5 wt% in the negative electrode active material.

5. The negative electrode active material of claim 1, wherein the carbon coating layer comprises amorphous carbon.

6. The negative electrode active material of claim 1, wherein a Brunauer-Emmett-Teller (BET) specific surface area of the negative electrode active material is in a range of 0.3 m$^2$/g to 2.5 m$^2$/g.

7. The negative electrode active material of claim 1, wherein an average particle diameter ($D_{50}$) of the negative electrode active material is in a range of 10 $\mu$m to 25 $\mu$m, measured by using a laser diffraction method.

8. The negative electrode active material of claim 1, wherein a true density of the negative electrode active material is in a range of 2.2 g/cm$^3$ to 2.3 g/cm$^3$, calculated by dividing a mass of the particles by the true volume.

9. The negative electrode active material of claim 1, wherein a spacing d002 of a crystal plane, which is measured by X-ray diffraction analysis (XRD) of the artificial graphite particles, is in a range of 0.3354 nm to 0.3370 nm.

10. The negative electrode active material of claim 1, wherein a crystallite size, which is determined by a full width at half maximum of a peak of a (002) plane in an X-ray diffraction spectrum of the artificial graphite particles, is in a range of 60 nm to 200 nm.

11. A negative electrode comprising:

a negative electrode current collector; and

a negative electrode active material layer disposed on the negative electrode current collector,

wherein the negative electrode active material layer comprises the negative electrode active material of claim 1.

12. The negative electrode of claim 11, wherein an area ratio I(004)/I(110) during X-ray diffraction analysis of the negative electrode is in a range of 8 to 14.

13. A secondary battery comprising:

the negative electrode of claim 11;

a positive electrode facing the negative electrode;

a separator disposed between the negative electrode and the positive electrode; and

an electrolyte.

**Patentansprüche**

1. Negatives Elektrodenaktivmaterial, umfassend:

künstliche Graphitteilchen; und

in den künstlichen Graphitteilchen verteilter Schwefel (S); und

eine auf den künstlichen Graphitteilchen angeordnete Kohlenstoffbeschichtung,

worin der Schwefel im Elektrodenaktivmaterial in einer Menge von 15 ppm bis 40 ppm enthalten ist,

worin das künstliche Graphitteilchen ein künstliches Graphitteilchen in Form eines Sekundärteilchens ist, in dem eine Vielzahl an primären künstlichen Graphitteilchen gebunden sind.

2. Negatives Elektrodenaktivmaterial gemäß Anspruch 1, worin die primären künstlichen Graphitteilchen einen durchschnittlichen Teilchendurchmesser ($D_{50}$), gemessen unter Verwendung eines Laserbeugungsverfahrens, von 5 $\mu$m bis 15 $\mu$m aufweisen.

3. Negatives Elektrodenaktivmaterial gemäß Anspruch 1, worin der Schwefel in einer Kristallstruktur der künstlichen Graphitteilchen verteilt ist.

4. Negatives Elektrodenaktivmaterial gemäß Anspruch 1, worin die Kohlenstoffbeschichtung in einer Menge von 0,1 Gew.-% bis 5 Gew.-% im negativen Elektrodenaktivmaterial enthalten ist.

5. Negatives Elektrodenaktivmaterial gemäß Anspruch 1, worin die Kohlenstoffbeschichtung amorphen Kohlenstoff umfasst.

6. Negatives Elektrodenaktivmaterial gemäß Anspruch 1, worin die spezifische Oberfläche des negativen Elektrodenaktivmaterials nach Brunauer-Emmett-Teller (BET) im Bereich von 0,3 m$^2$/g bis 2,5 m$^2$/g liegt.

7. Negatives Elektrodenaktivmaterial gemäß Anspruch 1, worin der durchschnittliche Teilchendurchmesser ($D_{50}$) des negativen Elektrodenaktivmaterials, gemessen unter Verwendung eines Laserbeugungsverfahrens, in einem Bereich von 10 $\mu$m bis 25 $\mu$m liegt.

8. Negatives Elektrodenaktivmaterial gemäß Anspruch 1, worin die wahre Dichte des negativen Elektrodenaktivmaterials, berechnet durch Division der Masse der Teilchen durch das wahre Volumen, im Bereich von 2,2 g/cm$^3$ bis 2,3 g/cm$^3$ liegt.

9. Negatives Elektrodenaktivmaterial gemäß Anspruch 1, worin der Abstand d002 einer Kristallebene, der mittels Röntgenbeugungsanalyse (XRD) der künstlichen Graphitteilchen gemessen wird, im Bereich von 0,3354 nm bis 0,3370 nm liegt.

10. Negatives Elektrodenaktivmaterial gemäß Anspruch 1, worin die Kristallitgröße, die durch die Halbwertsbreite eines Peaks der (002)-Ebene im Röntgenbeugungsspektrum der künstlichen Graphitteilchen bestimmt wird, im Bereich von 60 nm bis 200 nm liegt.

11. Negative Elektrode, umfassend:

    einen negativen Elektrodenstromabnehmer; und
    eine auf dem negativen Elektrodenstromabnehmer angeordnete negative Elektrodenaktivmaterialschicht,
    worin die negative Elektrodenaktivmaterialschicht das negative Elektrodenaktivmaterial gemäß Anspruch 1 umfasst.

12. Negative Elektrode gemäß Anspruch 11, worin das Flächenverhältnis I(004)/I(110) bei der Röntgenbeugungsanalyse der negativen Elektrode im Bereich von 8 bis 14 liegt.

13. Sekundärbatterie, umfassend:

    die negative Elektrode gemäß Anspruch 11;
    eine der negativen Elektrode zugewandte positive Elektrode;
    einen zwischen der negativen Elektrode und der positiven Elektrode angeordneten Separator; und
    einen Elektrolyten.

**Revendications**

1. Matériau actif d'électrode négative comprenant :

    des particules de graphite artificiel ; et du soufre (S) distribué dans les particules de graphite artificiel ; et

une couche de revêtement au carbone disposée sur les particules de graphite artificiel, dans lequel le soufre est inclus dans le matériau actif d'électrode en une quantité de 15 ppm à 40 ppm,
dans lequel la particule de graphite artificiel est une particule de graphite artificiel sous la forme d'une particule secondaire dans laquelle une pluralité de particules primaires de graphite artificiel sont liées.

2. Matériau actif d'électrode négative selon la revendication 1,
dans lequel les particules primaires de graphite artificiel présentent un diamètre de particule moyen ($D_{50}$) de 5 $\mu$m à 15 $\mu$m, mesuré en utilisant une méthode de diffraction laser.

3. Matériau actif d'électrode négative selon la revendication 1, dans lequel le soufre est distribué dans une structure cristalline des particules de graphite artificiel.

4. Matériau actif d'électrode négative selon la revendication 1,
dans lequel la couche de revêtement au carbone est incluse en une quantité de 0,1 % en poids à 5 % en poids dans le matériau actif d'électrode négative.

5. Matériau actif d'électrode négative selon la revendication 1,
dans lequel la couche de revêtement au carbone comprend du carbone amorphe.

6. Matériau actif d'électrode négative selon la revendication 1,
dans lequel une superficie spécifique Brunauer-Emmett-Teller (BET) du matériau actif d'électrode négative est dans une plage de 0,3 m$^2$/g à 2,5 m$^2$/g.

7. Matériau actif d'électrode négative selon la revendication 1,
dans lequel un diamètre de particule moyen ($D_{50}$) du matériau actif d'électrode négative est dans une plage de 10 $\mu$m à 25 $\mu$m, mesuré en utilisant une méthode de diffraction laser.

8. Matériau actif d'électrode négative selon la revendication 1,
dans lequel une densité réelle du matériau actif d'électrode négative est dans une plage de 2,2 g/cm$^3$ à 2,3 g/cm$^3$, calculée en divisant une masse des particules par le volume réel.

9. Matériau actif d'électrode négative selon la revendication 1,
dans lequel un espacement d002 d'un plan cristallin, qui est mesuré par analyse par diffraction des rayons X (XRD) des particules de graphite artificiel, est dans une plage de 0,3354 nm à 0,3370 nm.

10. Matériau actif d'électrode négative selon la revendication 1,
dans lequel une taille de cristallite, qui est déterminée par une largeur à mi-hauteur d'un pic d'un plan (002) dans un spectre de diffraction des rayons X des particules de graphite artificiel, est dans une plage de 60 nm à 200 nm.

11. Électrode négative comprenant :

un collecteur de courant d'électrode négative ; et
une couche de matériau actif d'électrode négative disposée sur le collecteur de courant d'électrode négative,
dans laquelle la couche de matériau actif d'électrode négative comprend le matériau actif d'électrode négative selon la revendication 1.

12. Électrode négative selon la revendication 11, dans laquelle un rapport de superficie I (004) / I (110) lors de l'analyse par diffraction des rayons X de l'électrode négative est dans une plage de 8 à 14.

13. Batterie secondaire comprenant :

l'électrode négative selon la revendication 11 ;
une électrode positive faisant face à l'électrode négative ;
un séparateur disposé entre l'électrode négative et l'électrode positive ; et
un électrolyte.

**EP 4 181 236 B1**

**REFERENCES CITED IN THE DESCRIPTION**

**Patent documents cited in the description**

- KR 1020200120878
- JP 4403327 B
- EP 2945209 B1
- EP 3641034 A1
- KR 20170048210 A